# EUROPEAN PATENT APPLICATION

(11) **EP 1 770 975 A2**
(43) Date of publication of application: **04.04.2007**
(21) Application number: 06121387.2
(22) Date of filing: 27.09.2006
(51) Int. Cl.: H04M 3/51, H04M 3/42

(54) **Method and apparatus for providing enhanced emergency service calls for nomadic users**

(30) Priority: 29.09.2005 US 240220
(71) Applicant: AT&T Corp., New York, NY 10013-2412 (US)
(72) Inventor: Croak, Marian, Fair Haven, NJ 07704 (US); Eslambolchi, Hossein, Los Altos Hills, CA 94022 (US)
(74) Representative: Harding, Richard Patrick

(57) **Abstract**

A method and apparatus for providing a Global Positioning System (GPS) tracking device to be integrated with a VoIP endpoint device and a subscriber's current GPS positioning data to be associated with the subscriber's telephone number are disclosed. The present invention enables a VoIP service provider to route an enhanced emergency service call such as an E911 call from a subscriber to the appropriate Public Safety Answering Point (PSAP) based on the current GPS positioning data of the subscriber's VoIP endpoint device. Moreover, the GPS positioning data will be sent to the PSAP as part of the E911 call.

## Description

The present invention relates generally to communication networks and, more particularly, to a method and apparatus for providing enhanced emergency service calls for nomadic users in communication networks, e.g., packet networks such as Voice over Internet Protocol (VoIP) networks.

### BACKGROUND OF THE INVENTION

Telecommunication carriers need to be able to offer subscribers of advanced services, such as VoIP services, access to emergency services such as Enhanced 911 (E911). In order to be eligible for the E911 service, VoIP subscribers need to use their subscribed VoIP services at a fixed location that matches the registered service address of the subscription. In addition, subscribers need to be assigned a phone number within the local calling area of the service address at that fixed location. However, one of the primary benefits of VoIP services is the ability to support nomadic subscribers who wish to move their VoIP endpoint device from one geographical location to another location without changing the telephone number. This mobility precludes nomadic subscribers from being eligible for E911 service. More importantly, this preclusion prevents subscribers from receiving help using their subscribed VoIP services in an emergency situation.

Therefore, a need exists for a method and apparatus for enabling enhanced 911 for nomadic users in a packet network, e.g., a VolP network.

### SUMMARY OF THE INVENTION

In one embodiment, the present invention enables a Global Positioning System (GPS) tracking device to be integrated with a IP endpoint device, e.g., a VoIP endpoint device and a subscriber's current GPS positioning data to be associated with the subscriber's telephone number. The present invention enables a VoIP service provider to route a E911 call from a subscriber to the appropriate Public Safety Answering Point (PSAP) based on the current GPS positioning data of the subscriber's VolP endpoint device. Moreover, the GPS positioning data will be sent to the PSAP as part of the E911 call. Thus, emergency personnel will be able to locate the subscriber's VoIP endpoint device, and hence the subscriber, in the event that the calling subscriber is unable to provide location information during an emergency. A GPS is a radio positioning system which derives location information via satellites to enable the accurate pinpointing of GPS equipped moving objects.

### BRIEF DESCRIPTION OF THE DRAWINGS

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of enabling enhanced 911 for nomadic users in a VoIP network of the present invention;

FIG. 3 illustrates a flowchart of a method for enabling enhanced 911 for nomadic users in a VoIP network of the present invention; and

FIG. 4 illustrates a high level block diagram of a general purpose computer suitable for use in performing the functions described herein.

To facilitate understanding, identical reference numerals have been used, where possible, to designate identical elements that are common to the figures.

### DETAILED DESCRIPTION

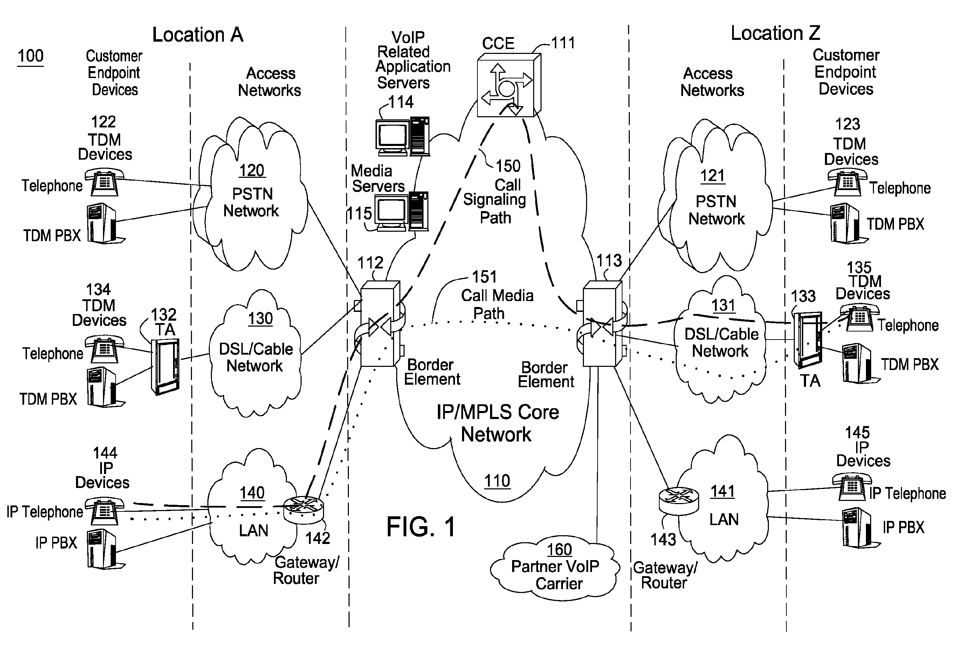

To better understand the present invention, FIG. 1 illustrates an example network, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SoIP (Service over Internet Protocol) network is considered an IP network.

In one embodiment, the VoIP network may comprise various types of customer endpoint devices connected via various types of access networks to a carrier (a service provider) VoIP core infrastructure over an Internet Protocol/Multi-Protocol Label Switching (IP/MPLS) based core backbone network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and 145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VoIP infrastructure comprises of several key VoIP components, such the Border Element (BE) 112 and 113, the Call Control Element (CCE) 111, VoIP related Application Servers (AS)114, and Media Server (MS) 115. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VolP related Application Servers (AS) in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VolP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VolP service related application server 114 to obtain the information to complete this call. In one embodiment, the Application Server (AS) functions as a SIP back-to-back user agent. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP 200 OK response message if SIP is used, is sent in the reverse direction back to the CCE 111. After the CCE 111 receives the call acknowledgement message, it will then send a call acknowledgement signaling message, such as a SIP 200 OK response message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, teleconference bridges, transcoding, and Interactive Voice Response (IVR) messages for VoIP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

Telecommunication carriers need to be able to offer subscribers of advanced services, such as VoIP services, access to emergency services such as Enhanced 911 (E911). An E911 call is broadly defined as a call for emergency service. In order to be eligible for the E911 service, VoIP subscribers need to use their subscribed VoIP services at a fixed location that matches the registered service address of the subscription. In addition, subscribers need to be assigned a phone number within the local calling area of the service address at that fixed location. However, one of the primary benefits of VoIP services is the ability to support nomadic subscribers who wish to move their VoIP endpoint device from one geographical location to another location without changing the telephone number. This mobility precludes nomadic subscribers from being eligible for E911 service. More importantly, this preclusion prevents subscribers from receiving help using their subscribed VoIP services in an emergency situation. E911 is an emergency response service that allows emergency personnel at a Public Safety Answering Point (PSAP) to receive the location of a caller placing the emergency call and the calling party phone number. A PSAP is an emergency response center that is responsible for answering E911 calls for emergency assistance from police, fire and ambulance services.

To address this criticality, the present invention enables a Global Positioning System (GPS) tracking device to be integrated with a IP endpoint, e.g., a VoIP endpoint device and a subscriber's current GPS positioning data to be associated with the subscriber's telephone number. The present invention enables a VoIP service provide to route a E911 call from a subscriber to the appropriate Public Safety Answering Point (PSAP) based on the current GPS positioning data of the subscriber's VoIP endpoint device. Moreover, the GPS positioning data will be sent to the PSAP as part of the E911 call; therefore, emergency personnel will be able to locate the subscriber's VolP endpoint device, and hence the subscriber, in the event that the calling subscriber is unable to provide location information during an emergency. A GPS is a radio positioning system which derives location information via satellite to enable the accurate pinpointing of GPS equipped moving objects.

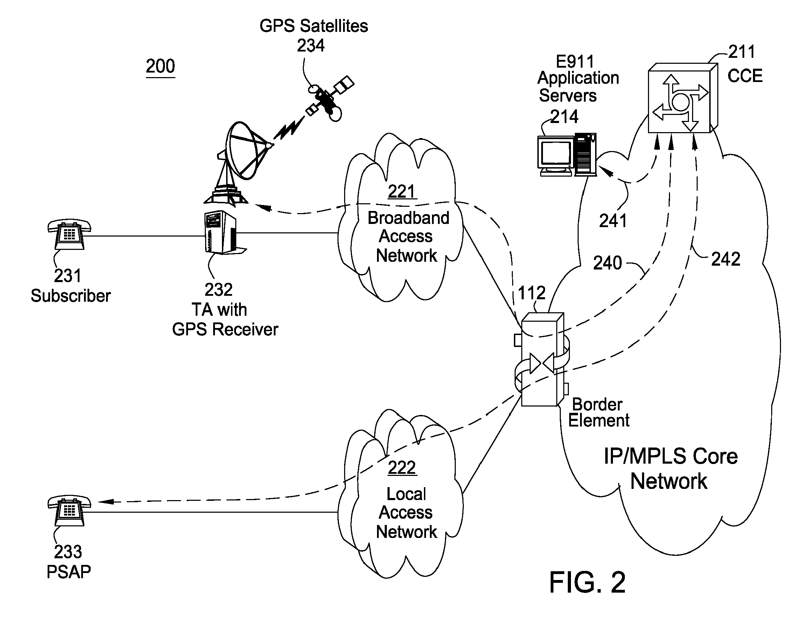

FIG. 2 illustrates a communication architecture 200 for enabling enhanced 911 for nomadic users in a packet network, e.g., a VoIP network of the present invention. In FIG. 2, subscriber 231 is a nomadic user who moves around frequently from one location to another. Subscriber 231 uses TA 232 equipped with a GPS receiver to access VoIP services. At its current location, TA 232 receives GPS positioning data from GPS satellites 234. TA 232 keeps track of its current location using the received GPS positioning data. When subscriber 231 makes an E911 call at the current location of TA 232, TA 232 sends a call setup message with the current GPS positioning data to the VolP network via broadband access network 221 and BE 212 using signaling flow 240. Upon receiving the call setup message with the current GPS positioning data from TA 232, CCE 211 communicates with E911 AS 214 using signaling flow 241 to map the GPS positioning data into the actual address of TA 232. Once the actual address of TA 232 is known, the appropriate PSAP, i.e. PSAP 233, which handles emergency responses local to the actual address of TA 232 will be identified by E911 AS 214. Using the correct PSAP information, CCE 211 routes the call setup message with the current GPS positioning data of TA 232 to the identified PSAP to handle the emergency E911 call. In this instance, CCE 211 routes the call setup message via BE 212 and local access network 222 using signaling flow 242 to PSAP 233. Note that local access network 222 is typically a PSTN network that connects to a PSAP. Once the call is received by PSAP 233, the current GPS positioning data of TA 232 transmitted as part of the call setup message can be used by emergency response personnel to locate TA 232 and, hence, subscriber 231.

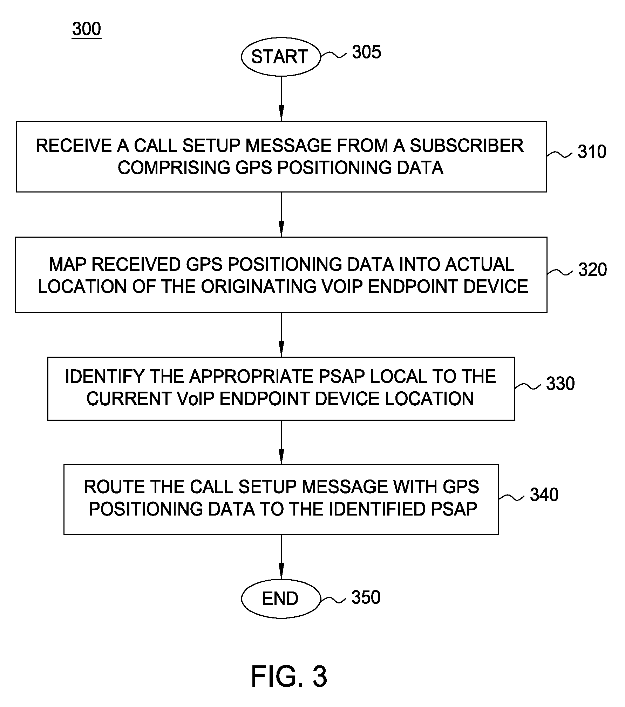

FIG. 3 illustrates a flowchart of a method 300 for enabling enhanced 911 for nomadic users in a packet network, e.g., a VolP network of the present invention. Method 300 starts in step 305 and proceeds to step 310.

In step 310, the method receives a call setup message, e.g., an E911 call comprising GPS positioning data from a subscriber. The GPS positioning data is the location of the VoIP endpoint device equipped with a GPS receiver used by the subscriber.

In step 320, the method maps the received GPS positioning data into the actual address of the VolP endpoint device. In other words, the GPS positioning data can be correlated to a street address, a nearby street intersection, a building number and so on.

In step 330, the method identifies the appropriate PSAP and its phone number that is local to the actual address of the VoIP endpoint device derived from the GPS positioning data. In other words, given the deduced location of the IP endpoint, an appropriate PSAP and its phone number are identified.

In step 340, the method routes the call setup message, using the identified PSAP phone number, along with the GPS positioning data to the identified PSAP to handle the emergency E911 call. The method ends in step 350.

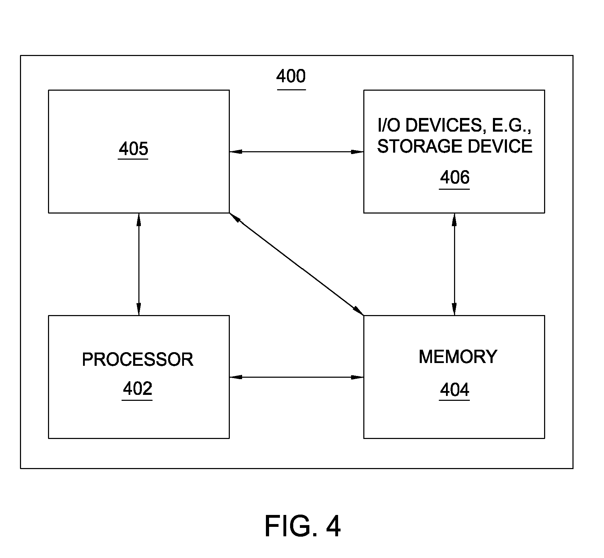

FIG. 4 depicts a high level block diagram of a general purpose computer suitable for use in performing the functions described herein. As depicted in FIG. 4, the system 400 comprises a processor element 402 (e.g., a CPU), a memory 404, e.g., random access memory (RAM) and/or read only memory (ROM), an E911 for nomadic users module 405, and various input/output devices 406 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present E911 for nomadic users module or process 405 can be loaded into memory 404 and executed by processor 402 to implement the functions as discussed above. As such, the present E911 for nomadic users process 405 (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for supporting a call for emergency service for a nomadic user in a communication network, comprising:
receiving a call setup message for emergency service, where said call setup message comprises Global Positioning System, GPS, positioning data from an endpoint device; and
routing said call setup message for emergency service to a Public Safety Answering Point, PSAP, in accordance with said Global Positioning System positioning data.

2. The method of claim 1, wherein said communication network is a Voice over Internet Protocol, VoIP, network or a Service over Internet Protocol, SoIP, network.

3. The method of claim 1 or 2, wherein said call setup message for emergency service is an E911 call setup message, where said E911 call setup message is received by a Call Control Element.

4. The method of claim 1, 2 or 3, wherein said endpoint device is equipped with a GPS receiver.

5. The method of any one of the preceding claims, wherein said routing comprises:
using said GPS positioning data to obtain an actual address of said endpoint device;
identifying said PSAP for handling said call setup message for emergency service; and
forwarding said call setup message for emergency service to said PSAP.

6. The method of claim 5, wherein said actual address is obtained from an Application Server (AS).

7. The method of claim 5 or 6, wherein said identifying comprises:
identifying said PSAP that handles emergency response local to said actual address; and
obtaining a phone number of said identified PSAP; and
wherein said call setup message for emergency service is preferably sent along with said GPS positioning data to said PSAP.

8. A computer-readable medium having stored thereon a plurality of instructions, the plurality of instructions including instructions which, when executed by a processor, cause the processor to perform the steps of the method of any one of the preceding claims.

9. An apparatus for supporting a call for emergency service for a nomadic user in a communication network, comprising:
means for receiving a call setup message for emergency service, where said call setup message comprises Global Positioning System, GPS, positioning data from an endpoint device; and
means for routing said call setup message for emergency service to a Public Safety Answering Point, PSAP, in accordance with said Global Positioning System, GPS, positioning data.

10. The apparatus of claim 9, wherein said communication network is a Voice over Internet Protocol, VoIP, network or a Service over Internet Protocol, SolP, network.

11. The apparatus of claim 9 or 10, wherein said endpoint device is equipped with a GPS receiver.

12. The apparatus of claim 9, 10 or 11, wherein said routing means comprises:
means for using said GPS positioning data to obtain an actual address of said endpoint device;
means for identifying said PSAP for handling said call setup message for emergency service; and
means for forwarding said call setup message for emergency service to said PSAP.
